# EUROPÄISCHE PATENTSCHRIFT

(11) **EP 1 974 848 B1**
(45) Veröffentlichungstag und Bekanntmachung des Hinweises auf die Patenterteilung: **19.11.2008**
(21) Anmeldenummer: 07006726.9
(22) Anmeldetag: 30.03.2007
(51) Int. Cl.: B23K 26/04

(54) **System und zugehöriges Verfahren zum Korrigieren einer Laserstrahlablenkeinheit**
System and and the method thereof for correcting a laser beam deflection device
Système et méthode correspondante destinés à la correction d'une unité de déflexion de faisceau laser

(43) Veröffentlichungstag der Anmeldung: 01.10.2008
(73) Patentinhaber: Innolas GmbH, 82152 Krailling (DE)
(72) Erfinder: Grundmüller, Richard, 80636 München (DE)
(74) Vertreter: Seitz, Ralf Hans Frank

(56) Entgegenhaltungen:
- EP-A- 1 231 627
- JP-A- 3 180 291
- JP-A- 58 224 088
- US-A- 5 315 111
- US-A1- 2006 202 115

## Beschreibung

Die vorliegende Erfindung betrifft ein System mit einer Vorrichtung zum Korrigieren einer Laserstrahlablenkeinheit, die einen Laserstrahl, der von einer Laserstrahlquelle erzeugt wird, innerhalb eines Ablenkfeldes zum Bearbeiten eines Substrats oder eines Körpers ablenkt, und ein zugehöriges Verfahren.

Die US 2006/0202115 A1 beschreibt ein System gemäss dem Oberbegriff des Anspruch 1 und ein Verfahren gemäss dem Oberbegriff des Anspruchs 12 zum Aufrechterhalten einer gewünschten Mittenposition eines kollimierten Laserstrahls mit einem optischen System, das passive optische Elemente hat, die im Laserstrahlweg angeordnet sind und die Strahlposition verändern können. Die tatsächliche Position des Laserstrahls wird mittels eines Vierquadrantendetektors detektiert, auf den ein abgezweigter, aufgeweiteter Teilstrahl fällt, und mit der gewünschten Strahlposition verglichen, die einer Mittenposition des Laserstrahls entspricht. Ein Fehlersignal wird erzeugt und der Strahlengang wird durch die passiven optischen Elemente geändert, um den Fehler zu kompensieren.

Ein weiteres Beispiel für eine Laserstrahlablenkeinheit in einer Lasereinrichtung ist in der EP 1 231 627 A2 beschrieben. Die bekannte Lasereinrichtung hat eine Strahlungsquelle, z.B. einen Excimer-Laser, die einen Laserstrahl erzeugt, der über einen Aufweiter und eine Lochblende der Laserstrahlablenkeinheit zum Bewegen oder Ablenken des Laserstrahls einem zu markierenden Gegenstand zugeführt wird. Am Ausgang der Laserstrahlablenkeinheit wird der Laserstrahl mittels einer Linse auf den Gegenstand fokussiert. Als Laserstrahlablenkeinheit wird hier eine Galvanometerspiegeleinheit, die auch als Galvanometerscanner bezeichnet wird, durch eine mikroprozessorgesteuerte und programmgestützte Steuereinheit gesteuert. Durch Temperatureffekte zum Beispiel an den Spiegeln und den Motoren der Laserstrahlablenkeinheit wird jedoch eine Positionsdrift der Laserstrahlablenkeinheit und damit auch eine unerwünschte Abweichung der Auftreffposition oder Arbeitsposition des Laserstrahls von der vorgegebenen Sollposition auf dem zu bearbeitenden Gegenstand erzeugt.

Die Aufgabe der Erfindung ist es deshalb, diese unerwünschte Abweichung der Auftreffposition des Laserstrahls von der vorgegebenen Position zu vermeiden.

Diese Aufgabe wird durch das System nach Anspruch 1 bzw. durch das Verfahren nach Anspruch 12 gelöst. Demnach hat das System der vorliegenden Erfindung eine Vorrichtung zum Korrigieren einer Laserstrahlablenkeinheit, die einen Laserstrahl von einer Laserstrahlquelle innerhalb eines Ablenkfeldes ablenkt, eine Steuereinheit, die mit der Laserstrahlablenkeinheit gekoppelt ist und ein vorgegebenes Muster an die Laserstrahlablenkeinheit ausgibt, eine Referenzstation, eine Folie oder ein Blatt als eine Referenzfläche aufweist, auf der die Laserstrahlablenkeinheit das vorgegebene Muster von der Steuereinheit als ein Referenzmuster mittels Ablenkung des Laserstrahls durch den Laserstrahl schreibt, eine Detektionseinrichtung, die mit der Steuereinheit gekoppelt ist und die Referenzfläche optisch abtastet, um das geschriebene Referenzmuster zu detektieren und ein zugeordnetes, detektiertes Muster oder Teilmuster zu erzeugen, wobei die Steuereinheit das detektierte Muster von der Detektionseinrichtung mit dem vorgegebenen Muster vergleicht, um eine Abweichung bzw. einen Fehler zwischen dem vorgegebenen Muster und dem detektierten Muster zum Korrigieren der Ablenkung des Laserstrahls in der Laserstrahlablenkeinheit zu ermitteln.

Wie sich herausgestellt hat, kann durch die Verwendung des Systems bzw. des Verfahrens der Erfindung die Genauigkeit der Arbeitsposition des Laserstrahls auf einem Substrat oder Gegenstand erheblich verbessert werden. Die Erfindung resultiert in einer überraschenderweise um einen Faktor bis zu 20 besseren Genauigkeit bei der Positionierung des Laserstrahls auf dem durch den Laserstrahl zu bearbeitenden Werkstück, was einen erheblichen Vorteil bedeutet. Dies ist vermutlich darauf zurückzuführen, dass durch die Erfindung sowohl Drifteffekte, die durch die Streu- und Leckstrahlung des Laserstrahls an den Umlenkspiegeln eines Galvanometerscanners als Laserstrahlablenkeinheit erzeugt werden, als auch Drifteffekte, die durch die an den Galvanomotoren des Scanners erzeugte Abwärme erzeugt werden, durch den Gegenstand der Erfindung weitgehend kompensiert werden können. Das System bzw. das Verfahren der Erfindung hat somit den erheblichen Vorteil, dass es eine hochgenaue Bearbeitung eines Werkstücks, eines Substrats, z.B. eines Wafers, einer Halbleitersolarzelle oder einer großflächigen Platte, ermöglicht.

Die Referenzfläche ist je nach Anwendung eine Folie, z.B. aus Kunststoff, oder ein Blatt, z.B. ein Papierblatt. Es ist jedoch auch eine Metallfolie oder eine metallbeschichtete Folie je nach Anwendungsfall und verwendeter Wellenlänge des Laserstrahls möglich. Damit kann die Erfindung in einer Vielzahl von Bearbeitungsanwendungen verwendet werden.

Bevorzugt ist die Referenzfläche in der Station verrutschsicher während der Durchführung des Verfahrens gehalten, um eine hohe Genauigkeit des Verfahrens der Erfindung sicherstellen zu können. Es kann eine Ansaugeinrichtung vorgesehen sein, die die Referenzfläche auf einem Teller der Station durch Ansaugung oder Unterdruck festhält.

Das auf der Referenzfläche mittels Laserstrahl erzeugte Referenzmuster kann mindestens ein Kreuz enthalten. Das Kreuzmuster ermöglicht ein sicheres und genaues Erfassen der Musterpositionsabweichung in der Prozessoreinheit.

Bevorzugt weist das durch den Laserstrahl auf der Referenzfläche geschriebene Referenzmuster eine Kreuzmatrix auf, die matrixförmig angeordnete Kreuze enthält, wodurch über die gesamte Referenzfläche eine Abweichungsermittlung und eine entsprechende Korrektur der Laserstrahlablenkeinheit erhalten werden können.

Die Referenzfläche deckt bevorzugt mindestens das Ablenkfeld oder Scanfeld des Laserstrahls in der Referenzstation ab, in der die Referenzfläche beschrieben wird. Damit ist sichergestellt, dass die Abweichung auch für das gesamte Scanfeld der Laserablenkeinheit ermittelt und die Ablenkung des Laserstrahls entsprechend korrigiert werden kann.

Bei dem Verfahren der Erfindung zum Korrigieren der Ablenkung einer Laserstrahlablenkeinheit, die einen Laserstrahl von einer Laserstrahlquelle innerhalb eines Ablenkfeldes ablenkt, wird zunächst ein vorgegebenes Muster von einer Steuereinheit an die Laserstrahlablenkeinheit ausgegeben. Das vorgegebene Muster wird dann von der Laserstrahlablenkeinheit mittels Ablenken des Laserstrahls durch den Laserstrahl als Referenzmuster auf eine Folie oder ein Blatt als Referenzfläche geschrieben bzw. auf dieser ausgebildet. Danach wird die Referenzfläche von einer Detektionseinrichtung abgetastet, um das geschriebene Referenzmuster zu detektieren und ein zugeordnetes, detektiertes Muster zu erzeugen. Das detektierte Muster von der Detektionseinrichtung wird anschließend in der Steuereinheit mit dem vorgegebenen Muster verglichen, um eine Positionsabweichung bzw. einen Positionsfehler zwischen dem vorgegebenen Muster und dem detektierten Muster zu ermitteln, und die Ablenkung des Laserstrahls in der Laserstrahlablenkeinheit wird schließlich in Abhängigkeit von der ermittelten Abweichung ,korrigiert.

Bevorzugt ist die Referenzfläche in der Zeit zwischen dem Beginn des Beschreibens mit dem vorgegebenen Muster durch den Laserstrahl und dem Beenden des Lesens des Referenzmusters auf der Referenzfläche ortsfest, wodurch die Genauigkeit des Korrekturverfahrens weiter verbessert werden kann.

Als Referenzfläche kann vor jedem neuen Schreibvorgang eine neue, unbeschriebene Referenzfläche zum Beschreiben verwendet werden, um eine eindeutige Detektion ermöglichen zu können.

Bevorzugt wird eine Kreuzmatrix mit matrixartig angeordneten Kreuzen als Referenzmuster auf die Referenzfläche durch den Laserstrahl erzeugt oder geschrieben. Die Kreuzmatrix kann regelmäßig sein, z.B. mit einer Anzahl von Kreuzen zwischen 3 x 3 Kreuzen und 20 x 20 Kreuzen und entsprechend vielen Kreuzungspunkten als Stützpunkte, wodurch eine Positionsfehlerkorrektur oder Positionsfehlerkompensation über das gesamte Scanfeld des Lasers ermöglicht wird und zudem z.B. eine lineare Interpolation des Fehlers für Zwischenpunkte zwischen den Stützpunkten für das gesamte Scanfeld ermöglicht wird.

Beim Lesen der Kreuzmatrix des Referenzmusters auf der Referenzfläche kann die Detektionseinrichtung zu jedem einzelnen der Kreuze der Kreuzmatrix in einer XY-Ebene verfahren werden, um gemäß dem vorgegebenen Muster das jeweils angefahrene Kreuz der Kreuzmatrix aufzunehmen. Durch das einzelne Aufnehmen jedes geschriebenen Kreuzes der mit Laser geschriebenen Kreuzmatrix auf der Referenzfläche kann der Vergleich vereinfacht werden und eine hohe Genauigkeit beim Vergleichen erzielt werden.

Bevorzugt wird aus den ermittelten XY-Positionsabweichungen bzw. Fehlern des jeweils geschriebenen Kreuzes der Kreuzmatrix von der Verarbeitungseinheit von der zentralen Steuereinheit eine Feldkorrekturtabelle für das gesamte Ablenkfeld der Ablenkeinheit erzeugt, wodurch Positionsabweichungen auch über die gesamte Ablenkfläche des Scanfelds korrigiert werden können.

Bevorzugt wird ein Positionsfehler für einen Punkt oder eine Position zwischen zwei Kreuzungspunkten von Kreuzen der Kreuzmatrix durch z.B. eine lineare Interpolation, eine Interpolation höherer Ordnung oder nicht-lineare Interpolation von der Steuereinheit ermittelt, um die Fehlerkorrektur über die gesamte Ablenkfläche oder Schreibfläche des Laserstrahls durchführen zu können.

Die Werte der Feldkorrekturtabelle können gemäß der Erfindung dazu verwendet werden, eine tatsächliche Arbeitsposition des Laserstrahls in der Ablenkeinheit derart zu korrigieren, dass die tatsächliche Arbeitsposition oder Auftreffposition des Laserstrahls auf einem zu bearbeitenden Substrat gleich der vorgegebenen Arbeitsposition ist.

Die Laserstrahlablenkeinheit wird vor dem Beschreiben der Referenzfläche bevorzugt in eine vorgegebene Position oder Anfangsposition, z.B. in eine Mittenposition über der Referenzfläche, bewegt.

Das Verfahren der Erfindung wird bevorzugt mehrmals hintereinander ausgeführt, um sukzessive die Genauigkeit der Positionsabweichungskorrektur der Laserablenkeinheit erhöhen zu können.
Das Verfahren der Erfindung kann periodisch durchgeführt werden, um insbesondere Langzeitdriften der Spiegelantriebe in einem Galvanoscanner kompensieren zu können. Bevorzugt wird das Verfahren alle acht Stunden durchgeführt.

Das Verfahren kann auch in Abhängigkeit von der Arbeitszeit der Laserablenkeinheit durchgeführt werden, um auch schwankende geometrische Driften der Laserablenkeinheit kompensieren und korrigieren zu können. Hierzu wird bevorzugt die Arbeitszeit der Laserablenkeinheit gemessen, wobei in Abhängigkeit von der gemessenen Arbeitszeit der Laserablenkeinheit das Verfahren der Erfindung periodisch durchgeführt wird.

Das System bzw. das Verfahren der Erfindung kann in einer Bearbeitungsvorrichtung zum Bearbeiten eines Werkstücks, insbesondere eines flächigen Werkstücks, eines Wafers, einer Platte oder einer Halbleitersolarzelle, mit einem Laserstrahl verwendet werden..

Weitere vorteilhafte Weiterbildungen der Erfindung sind den Unteransprüchen zu entnehmen. Weitere Vorteile, vorteilhafte Weiterbildungen der Erfindung und weitere Anwendungsmöglichkeiten der Erfindung sind der nachfolgenden Beschreibung von bevorzugten und beispielhaften Ausführungsformen der Erfindung in Verbindung mit den Zeichnungen zu entnehmen. Es zeigen:
- Fig. 1: eine perspektivische Gesamtansicht einer beispielhaften, bevorzugten Ausführungsform des Systems der Erfindung, die z.B. in einer Maschine zum Bearbeiten von flächigen oder waferartigen Halbleitersolarzellen verwendet wird,
- Fig. 2: eine herausgeschnittene Detailansicht, die eine Laserstrahlablenkeinheit mit Laserstrahl von Fig. 1 zeigt;
- Fig. 3: eine Draufsicht auf eine beispielhafte Referenzfläche mit einem Kreuzmatrixmuster in Originalgröße zur Verwendung in der Vorrichtung von Fig. 1 und in dem Verfahren der Erfindung;
- Fig. 4: ein schematisches Blockdiagramm einer bevorzugten Steuereinheit mit Schnittstellen zu den peripheren Einrichtungen der Vorrichtung der Erfindung von Fig. 1 ; und
- Fig. 5: eine Darstellung zum Erläutern des Vergleichs zwischen einem Vorlagemuster und einem detektierten Muster zum Ermitteln eines zugehörigen Fehlers.

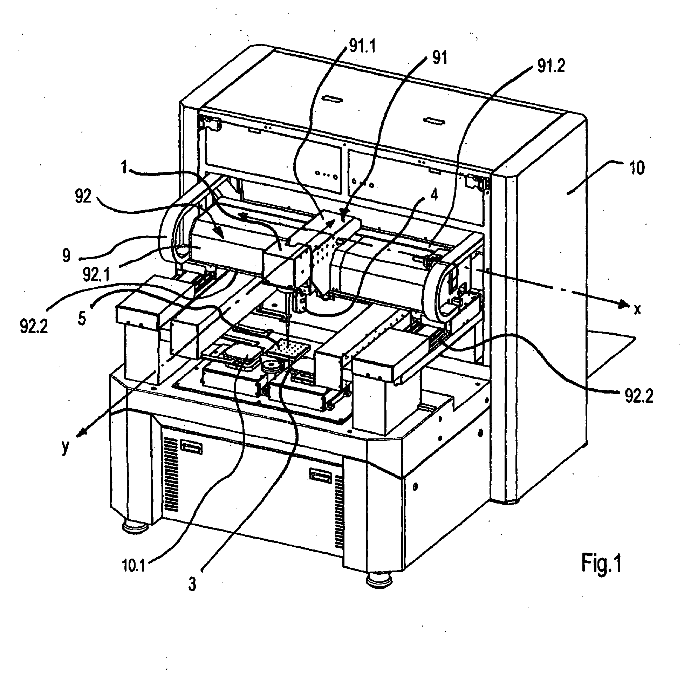

In Fig. 1 ist beispielhaft eine perspektivische Gesamtansicht einer Bearbeitungsvorrichtung 10 zum Bearbeiten von flächigen oder waferartigen Halbleitersolarzellen 10.1 gezeigt, in der eine bevorzugte Ausführungsform des Systems der Erfindung verwendet wird, das eine Laserstrahlablenkeinheit 1, einen Antrieb 9 zum Verfahren der Laserstrahlablenkeinheit 1 in einer XY-Ebene und eine Vorrichtung mit einer Referenzstation 3 mit einer Referenzfläche 5 und einer Detektionseinrichtung 4 zum Detektieren der Referenzfläche 5 hat.

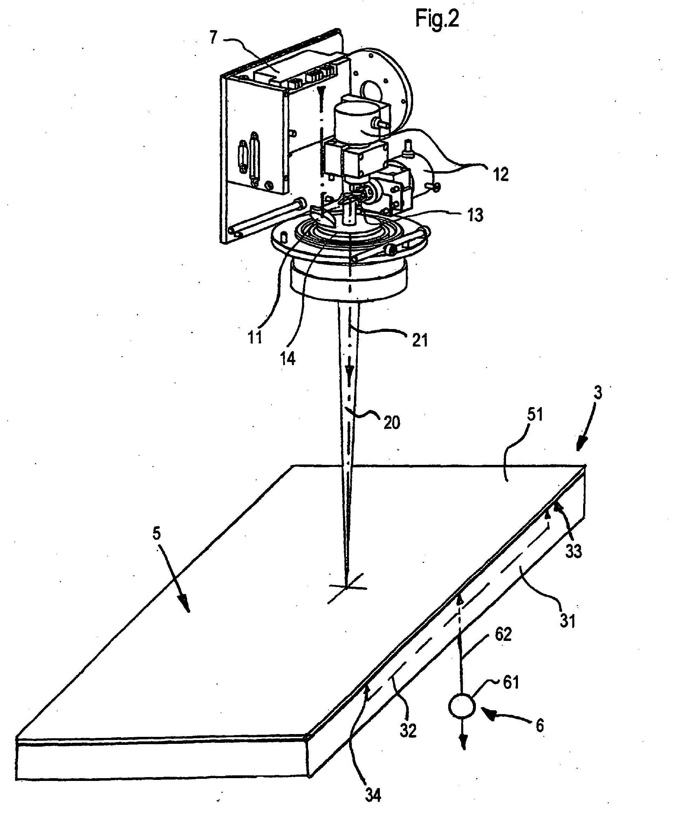

Die Laserstrahlablenkeinheit 1 lenkt einen Laserstrahl 20 auf die Referenzfläche 5 ab, um mit dem Laserstrahl 20 ein vorgegebenes Referenzmuster 52 auf die Referenzfläche 5 schreiben zu können. Der Laserstrahl 20 wird von einem Laser 7 als Laserstrahlquelle erzeugt und der Laserstrahlablenkeinheit 1 zum Ablenken des Laserstrahls 20 zugeführt. Die Laserstrahlablenkeinheit 1 kann als ein Galvano-Scanner aufgebaut sein, der einen oder mehrere Ablenkspiegel 13, die typischerweise einen ersten Spiegel zum Ablenken des Laserstrahls in einer X-Richtung und einen zweiten Spiegel zum Ablenken des Laserstrahls 20 in einer Y-Richtung haben, zum Ablenken des Laserstrahls 20 derart aufweist, dass der Laserstrahl 20 über ein Ablenkfeld abgelenkt werden kann, das auch als Scanfeld bezeichnet wird. Die Laserstrahlablenkeinheit 1 kann den Laserstrahl 20 durch eine entsprechende Lageänderung der Ablenkspiegel 13 ablenken, die durch elektromotorische Spiegelantriebe 12 gesteuert werden, welche wiederum mit den Ablenkspiegeln 13 gekoppelt sind. Weiterhin ist eine Fokussiereinrichtung 14, z.B. eine Fokussierlinse, in der Laserstrahlablenkeinheit 1 vorgesehen, die den von den Ablenkspiegeln 13 abgelenkten Laserstrahl 20 auf die Referenzfläche 5 in der Referenzstation 3 fokussiert. In Fig. 2 ist ein Mittenstrahl 21 des Laserstrahls 20 gezeigt, um den Strahlengang des Laserstrahls 20 zu verdeutlichen. Genauer wird der von dem Laser 7 erzeugte Laserstrahl 20 über ein Umlenkprisma 11 der Laserstrahlablenkeinheit 1 auf die Ablenkspiegel 13 geworfen und von dort auf die Fokussierlinse 14, die den Laserstrahl 20 auf die Referenzfläche 5 fokussiert.

Die Referenzfläche 5 ist z.B. ein Papierblatt 51, das bevorzugt weiß und unbeschrieben ist und auf einem ebenen, waagrechten Teller 31 der ortsfesten Referenzstation 3 liegt. Die Größe der Referenzfläche 5 bzw. des Papierblatts 51 entspricht mindestens der Größe des Ablenkfelds des Laserstrahls 20 in der XY-Ebene der Referenzfläche 5.

Der Teller 31 der Referenzstation 3 ist mit einer Ansaugeinrichtung 6 für die Referenzfläche 5 bzw. das Papierblatt 51 versehen, die das Papierblatt 51 auf dem Teller 31 durch Ansaugen festhält. Die Ansaugeinrichtung 6 hat hierzu im wesentlichen eine Ansaugpumpe 61 und eine Leitung 62, die die Ansaugpumpe 61 mit einem Kanalsystem 32, das in dem Teller 31 ausgebildet ist, fluiddurchgängig koppelt. Das Kanalsystem 32 endet an einer ebenen und waagrechten Oberseite 33 des Tellers 31 mit freiliegenden Ansaugöffnungen 34, die regelmäßig über die ganze Oberseite 33 des Tellers 31 verteilt zum Ansaugen des Papierblatts 51 ausgebildet sind. Die Ansaugöffnungen 34 sind in Fig. 2 durch Pfeilspitzen an der Oberseite 33 des Tellers 31 angedeutet.

Der Antrieb 9 hat einen x-Linearantrieb 91 zum Bewegen der Laserstrahlablenkeinheit 1 in der x-Richtung und einen y-Linearantrieb 92 zum Bewegen der Laserstrahlablenkeinheit 1 in der y-Richtung, wobei die x-Richtung und die y-Richtung in Fig. 1 strich-punktiert eingezeichnet sind. Der x-Linearantrieb 91 weist einen ersten Wagen 91.1, an dem die Laserstrahlablenkeinheit 1 befestigt ist, einen ersten, elektrischen Linearmotor zum Bewegen des ersten Wagens 91.1 in der x-Richtung und erste Schienen 91.2 bzw. Führungen auf, die sich in die x-Richtung erstrecken und auf denen sich der erste Wagen 91.1 angetrieben durch den ersten Linearmotor in x-Richtung bewegen kann. Der y-Linearantrieb 92 weist einen zweiten Wagen 92.1, der den gesamten x-Linearantrieb 91 zusammen mit der Laserstrahlablenkeinheit 1 trägt, einen zweiten Linearmotor zum Bewegen des zweiten Wagens 92.1 in der y-Richtung und zweite Schienen 92.2 bzw. Führungen auf, die sich in y-Richtung erstrecken und auf denen sich der zweite Wagen 92.1 angetrieben durch den y-Linearmotor in y-Richtung bewegen kann.

Die Detektionseinrichtung 4 ist z.B. eine Halbleiterkamera 4.4 mit einem Objektiv 4.1 zum Erfassen eines Bildes, einem CCD-Chip 4.2, auf den das Objektiv 4.1 das erfasste Bild abbildet, und einer zugehörigen, elektronischen Kameraschnittstelle 4.3, die mit einem Ausgang des CCD-Chips 4.2 gekoppelt ist und dem detektierten Bild entsprechende, digitale Pixeldaten erzeugt und bereitstellt. Die Detektionseinrichtung 4 bzw. Halbleiterkamera 4.4 ist ortsfest an dem ersten Wagen 91.1 befestigt und ist mit ihrem Objektiv 4.1 der waagrechten Oberseite 33 des Tellers 31 der Referenzstation 3 bzw. der ebenen Referenzfläche 5, z.B. dem Papierblatt 51, derart mit Abstand zugewandt, dass eine Mittenstrahlachse 4.8 des Objektivs 4.1 senkrecht auf der Oberseite 33 bzw. der Referenzfläche 5 oder dem Papierblatt 51 steht. Die Mittenstrahlachse 4.8 der Halbleiterkamera 4.4 ist somit genau parallel zu der Mittenachse 21 des Laserstrahls 20 ausgerichtet, wenn der Laserstrahl 20 und somit seine Mittenachse 21 senkrecht auf die Referenzfläche 5 auftrifft. Die Detektionseinrichtung 4 kann mittels des Antriebs 9 an eine beliebige Stelle oder Position über der Referenzfläche 5 bzw. dem Papierblatt 51 positioniert werden.

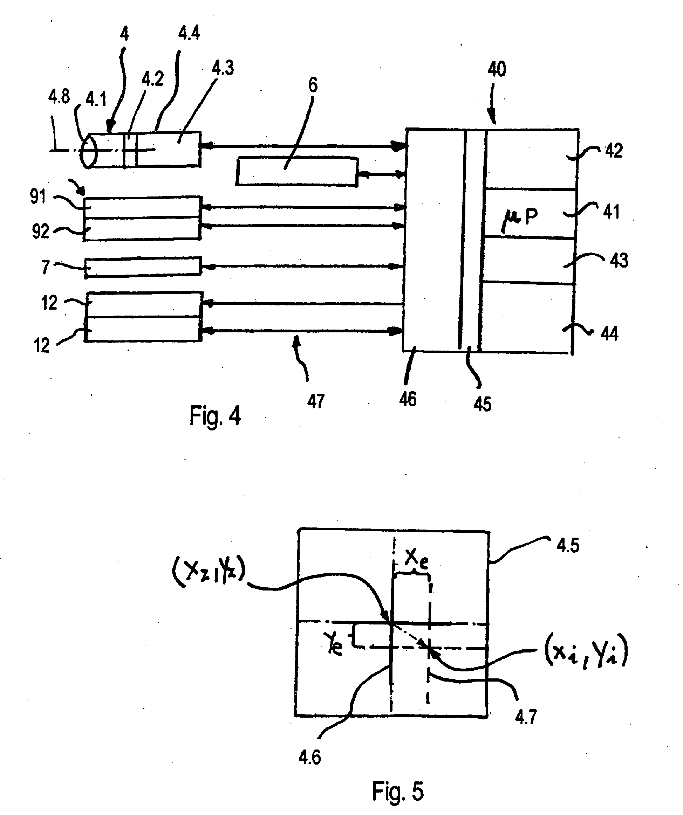

Die Vorrichtung hat weiterhin eine Prozessoreinheit oder zentrale Steuereinheit 40 (vgl. Fig. 4), die als softwaregesteuerte Mikrocomputereinheit mit einem Mikroprozessor 41, einem Halbleiterspeicher 42 zum Speichern von Daten und Steuerprogrammen, einer integrierten I/O-Einheit 46, einer Anzeigeeinheit 43 und einer Eingabeeinheit 44, z.B. einer Tastatur, und einem Bussystem 45 mit mehreren Steuer- und Datenleitungen aufgebaut ist, das mit dem Mikroprozessor 41, dem Halbleiterspeicher 42, der I/O-Einheit 46, der Eingabeeinheit 44 und der Anzeigeeinheit 43 zum bidirektionalen Austausch von Daten und Steuerbefehlen verbunden ist. Die Steuereinheit 40 führt sämtliche Steuerungen und Funktionen der Vorrichtung und des Verfahrens der Erfindung softwaregestützt aus.

Die I/O-Einheit 46 ist als universelle Schnittstelle für den bidirektionalen Austausch von Daten und Steuerbefehlen zwischen dem Mikroprozessor 41 und den peripheren Einrichtungen der Vorrichtung der Erfindung über eine entsprechende Verkabelung 47 aufgebaut. So ist die I/O-Einheit 46 insbesondere mit der Halbleiterkamera 4.4 als Detektionseinrichtung 4, genauer mit der Kameraschnittstelle 4.3 der Halbleiterkamera 4.4, gekoppelt, damit die erzeugten, digitalen Pixeldaten der Kameraschnittstelle 4.3 in die Steuereinheit 40 bzw. den Mikroprozessor 41 eingelesen und darin weiter verarbeitet werden können. Weiterhin ist die I/O-Einheit 46 der Steuereinheit 40 auch mit dem Antrieb 9 verbunden, um Steuerbefehle an den x-Linearantrieb 91 und den y-Linearantrieb 92 zum Steuern der Bewegung der Laserstrahlablenkeinheit 1 und der Detektionseinrichtung 4 in der x-Richtung und der Y-Richtung, also in einer XY-Ebene, ausgeben zu können. Zudem ist die I/O-Einheit 46 mit der Laserquelle bzw. dem Laser 7 gekoppelt, um Steuerbefehle zum Ein- und Ausschalten und Betreiben des Lasers 7 und zum Steuern der Intensität des Laserstrahls 20 an den Laser 7 ausgeben zu können. Die Steuereinheit 40 ist über die I/O-Einheit 46 zudem auch mit der Laserstrahlablenkeinheit 1 gekoppelt, um Steuerbefehle an die Spiegelantriebe 12 der Laserstrahlablenkeinheit 1 zum Ablenken des Laserstrahls 20 auf einen beliebigen, vorgegeben Punkt der Referenzfläche 5 bzw. des Papierblatts 51 innerhalb des gesamten Scanfelds der Laserstrahlablenkeinheit 1 oder zum Schreiben eines vorgegebenen Musters auf die Referenzfläche bzw. das Papierblatt 51 ausgeben zu können. Zudem ist die Steuereinheit 40 über ihre I/O-Einheit 46 auch mit der Ansaugpumpe 61 der Ansaugeinrichtung 6 gekoppelt, um über entsprechende Steuerbefehle und elektrische Signale das Einschalten der Ansaugpumpe 61 zum Ansaugen der Referenzfläche 5 bzw. des Papierblatts 51 oder zum Abschalten der Ansaugpumpe 61 und damit zum Freigeben der Referenzfläche 5 oder des Papierplatts 51 steuern zu können.

Nachfolgend wird eine beispielhafte Ausführungsform des Verfahrens der Erfindung in Verbindung mit der zuvor beschriebenen und bevorzugten Vorrichtung der Erfindung erläutert.

Beim Initialisieren des Verfahrens zum Korrigieren oder Kompensieren der Laserstrahlablenkeinheit 1 wird zunächst zumindest einmal ein Vorlagemuster mit der Vorrichtung der Erfindung erzeugt und in dem Halbleiterspeicher 42 der Steuereinheit 40 als digitales Pixeldatenmuster abgespeichert. Dabei wird zunächst vom Bediener der Vorrichtung ein Initialmuster durch Programmieren der Steuereinheit 40 durch Eingabe entsprechender Befehle und Daten mittels der Eingabeeinheit 44 erzeugt. Hierbei wird ein einzelnes Initialmuster in der Form eines Kreuzes erzeugt, insbesondere eines Vollkreuzes mit gleichlangen Kreuzschenkeln, wie es später auch mehrmals in der Kreuzmatrix als Referenzmuster auf dem Papierblatt 51 als Referenzfläche 5 auftritt.

Anschließend wird ein unbeschriebenes, weißes Vorlage-Papierblatt auf den waagrechten Teller 31 der Referenzstation 3 aufgelegt. Durch die Eingabe zugehöriger Steuerbefehle an der Eingabeeinheit 44 z.B. durch einen Bediener wird dann ein Schreibzyklus mit dem Laserstrahl 20 auf dem Vorlage-Papierblatt ausgelöst und durchgeführt.

Der Schreibzyklus beim Beschreiben des Vorlage-Papierblatts wird zunächst durch die Eingabe eines entsprechenden Schreibbefehles in die Steuereinheit 40 ausgelöst. Unter der Steuerung der Steuereinheit 40 wird dabei zunächst die Ansaugpumpe 61 der Ansaugeinrichtung 6 eingeschaltet, um über das Leitungssystem 32 und die Ansaugöffnungen 34 im Teller 31 der Referenzstation 3 das Vorlage-Papierblatt anzusaugen und ortsfest während des Vorlage-Schreibzyklus festzuhalten.

Die Steuereinheit 40 steuert dann unter Verwendung eines internen Programms den X-Linearantrieb 91 und den Y-Linearantrieb 92 des Antriebs 9 derart an, dass die Laserstrahlablenkeinheit 1 bzw. der Laserkopf über einer zentralen Mittenposition (x_{z},y_{z}) mit Bezug auf die Oberseite 33 des ebenen Tellers 31 positioniert wird. In der Mittenposition (x_{z},y_{z}) steht die Mittenachse 21 des Laserstrahls 20 senkrecht auf der Oberseite 33 des Tellers 31 bzw. senkrecht auf dem Vorlage-Papierblatt.

Nachdem diese Mittenposition erreicht worden ist, schaltet die Steuereinheit 40 die Laserquelle bzw. den Laser 7 ein und der erzeugte Laserstrahl 20 wird über die Laserstrahlablenkeinheit 1 auf das Vorlage-Papierblatt entsprechend der Mittenposition (x_{z},y_{z}) geworfen und sukzessive wird dann ein komplettes Kreuz entsprechend dem abgespeicherten Initialmuster als Vorlage-Referenzmuster geschrieben, wobei die Spiegelantriebe 12 der Laserstrahlablenkeinheit 1 von der Steuereinheit 40 entsprechend dem gespeicherten Initialmuster angesteuert werden, um die beiden Ablenkspiegel 13 zum Ablenken des Laserstrahls 20 auszulenken. Beim "Schreiben" wandert der Laserstrahl 20 über die freiliegende Oberfläche des Vorlage-Papierblatts, wobei die Papieroberfläche verbrennt und eine entsprechend geschwärzte Spur auf dem Papier entsteht, die ein Kreuz als geschriebenes Vorlage-Referenzmuster wiedergibt. Nach dem Schreiben des Vorlage-Referenzmusters wird dann der Laserstrahl 20 auf Befehl der zentralen Steuereinheit 40 wieder abgeschaltet.

Als nächstes wird dann die Detektionseinrichtung 4 von der Steuereinheit 40 eingeschaltet und der x-Linearantrieb 91 und den y-Linearantrieb 92 des Antriebs 9 wird von der Steuereinheit 40 über ihre I/O-Einheit 46 derart angesteuert, dass die Detektionseinrichtung 4 bzw. die Halbleiterkamera 4.4 in der Mittenposition (x_{z},y_{z}) über dem geschrieben Vorlage-Referenzmuster positioniert wird, wobei der Steuereinheit 40 der Abstand zwischen der Mittenachse 21 des Laserstrahls 20 und der Mittenstrahlachse 4.8 der Halbleiterkamera 4.4 bekannt ist. Über das Objektiv 4.1, den CCD-Chip 4.2 und die Kameraelektronik 4.3 der Halbleiterkamera 4.4 wird dann ein digitales Pixeldatenmuster des geschriebenen Vorlagemusters aufgenommen und erzeugt und über die Steuereinheit 40 auf der Anzeigeeinheit 43 der Steuereinheit 40 mit dem gesamten Aufnahmefeld 4.5 der Halbleiterkamera 4.4 angezeigt. Die schwarzen Pixel des Pixeldatenmusters mit dem Wert "1" entsprechen dem geschriebenen Kreuz des Vorlage-Referenzmusters auf dem Vorlage-Papierblatt. Die weißen Pixel des Pixeldatenmusters mit dem Wert "0" entsprechen dagegen den unbeschriebenen, weißen Bereichen des Vorlage-Papierblatts. Insgesamt wird auf der Anzeigeeinheit 43 genau das Aufnahmefeld 4.5 der Halbleiterkamera 4.4 mit dem detektierten, geschriebenen Vorlage-Referenzmuster angezeigt. Der Bediener kann dann durch Eingabe entsprechender Steuerbefehle für den Antrieb 9 die Halbleiterkamera 4.4 derart über dem Vorlage-Papierblatt verfahren, dass das detektierte Vorlagemuster genau zentriert mittig in dem angezeigten Aufnahmefeld 4.5 der Halbleiterkamera 4.4 auf der Anzeigeeinheit 43 erscheint. Das so zentrierte, detektierte, kreuzförmige Vorlagemuster entspricht nun dem gesuchten kreuzförmigen Vorlagemuster 4.6 (vgl. Fig. 5), das als entsprechendes, digitales Pixeldatenmuster in dem Halbleiterspeicher 42 der Steuereinheit 40 abgespeichert wird. Die Ansaugpumpe 61 kann dann abgeschaltet werden und das Vorlage-Papierblatt kann entfernt werden.

Im nächsten Schritt wird dann ein Punktmatrixmuster unter Verwendung von z.B. einem CAD-Programm oder einem Graphikprogramm auf der Steuereinheit 40 erzeugt. Das Punktmatrixmuster kann aber auch extern erzeugt werden und in die Steuereinheit 40 von außen geladen werden. Das Punktmatrixmuster gibt eine Punktmatrix an, in der Punkte mit entsprechenden XY-Punktkoordinaten gleichmäßig in m Zeilen und n Spalten angeordnet sind. Die Punktmatrix hat also m x n Punkte bzw. Positionspunkte mit entsprechenden XY-Koordinaten, die sich auf eine Schreibebene des Laserstrahls 20, z.B. auf die Oberseite 33 des Tellers 31 der Referenzstation 3 beziehen. Der Abstand zwischen zwei Punkten einer Zeile oder zwei Punkten einer Spalte in der Punktmatrix ist gleich. Die so aufgebaute Punktmatrix wird in dem Halbleiterspeicher 42 der Steuereinheit 40 abgespeichert.

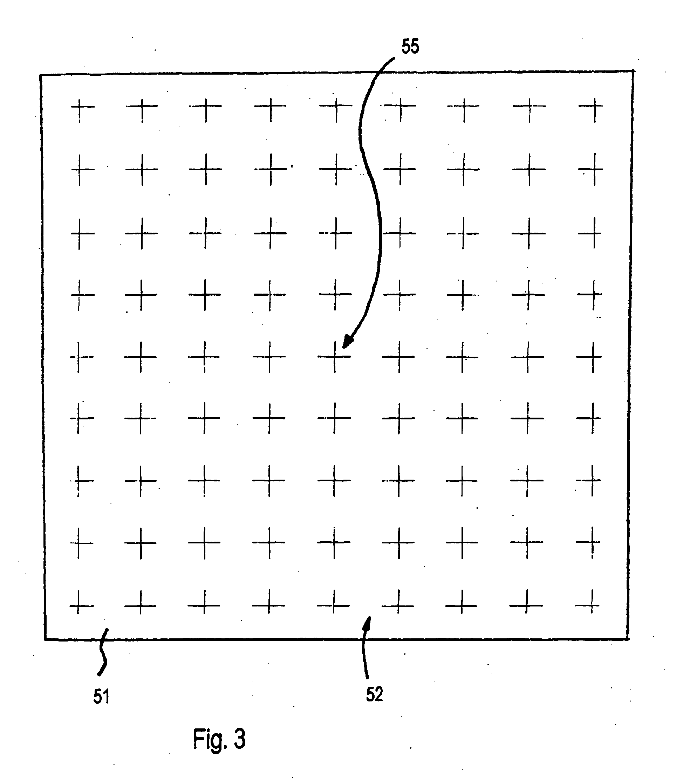

Betrachtet man die in Fig. 3 gezeigte, in Originalgröße geschriebene Kreuzmatrix des Referenzmusters 52 als Punktmatrix und setzt man die Kreuzungspunkte der einzelnen Kreuze der gezeigten Kreuzmatrix gleich den Punkten der Punktmatrix, so hat die gedachte Punktmatrix 9 Zeilen und 9 Spalten mit insgesamt 81 Punkten, wobei die Punkte einer Zeile der Punktmatrix genau auf einer geraden Linie und die Punkte einer Spalte genau auf einer geraden Linie liegen und der Abstand zwischen jeweils zwei Punkten einer Zeile 16 mm und der Abstand zwischen jeweils zwei Punkten einer Spalte auch genau 16 mm beträgt.

Aus der Punktmatrix und dem abgespeicherten, kreuzförmigen Vorlagemuster 4.6 wird nun mittels in der Steuereinheit 40 installierter Software ein vorgegebenes Kreuzmatrixmuster als vorgegebenes Muster erzeugt, indem das kreuzförmige Vorlagemuster 4.6 zu jedem der Punkte der Punktmatrix verktoriell verschoben wird, so dass der Kreuzungspunkt oder Mittelpunkt der Kreuzung des kreuzförmigen Vorlagemusters 4.6 mit dem jeweiligen Punkt der Punktmatrix übereinstimmt. Die so mit Kreuzen gefüllte Punktmatrix entspricht dann dem vorgegebenen Kreuzmatrixmuster oder vorgegebenen Muster und wird als entsprechende digitales Pixeldatenmuster in dem Halbleiterspeicher 42 der Steuereinheit 40 abgespeichert. Analog zu dem real mit dem Laserstrahl 20 geschriebenen Kreuzmatrixmuster von Fig. 3 hat das vorgegebene Kreuzmatrixmuster dann 9 Zeilen und 9 Spalten mit insgesamt 81 Kreuzen, wobei der Abstand zwischen den Kreuzungspunkten von jeweils zwei benachbarten Kreuzen in einer Zeile oder in einer Spalte der vorgegebenen Kreuzmatrix gleich ist und hier in dem Beispiel 16 mm beträgt. Zudem befinden sich die Kreuzungspunkte der Kreuze einer Zeile oder der Kreuze einer Spalte genau auf einer gedachten Geraden. Die erzeugte, vorgegebene Kreuzmatrix kann auch als Soll-Kreuzmatrix betrachtet werden. Die Initialisierungsphase wird mit dem Erzeugen und Abspeichern der vorgegebenen Kreuzmatrix als vorgegebenes Muster abgeschlossen.

Nachfolgend wird die Erzeugung einer Feldkorrekturtabelle für die Ansteuerung der Laserstrahlablenkeinheit 1 erläutert.

Um die tatsächlichen Positionsabweichungen bzw. Positionsfehler der Laserstrahlablenkeinheit 1 von den vorgegebenen Koordinaten in der XY-Ebene auf der Referenzfläche 5 beim Schreibvorgang ermitteln zu können, wird zunächst eine unbeschriebenes, weißes Papierblatt 51 als Referenzfläche 5 auf die Oberseite 33 des Tellers 31 der Referenzstation 3 aufgelegt. Durch die Eingabe zugehöriger Steuerbefehle an der Eingabeeinheit 44 wird dann ein Schreibzyklus zum Erzeugen eines kompletten Referenzmusters mit dem Laserstrahl 20 auf dem Papierblatt 51 als Referenzfläche 5 ausgelöst und durchgeführt.

Der Schreibzyklus beim Beschreiben des Papierblatts 51 als Referenzfläche wird zunächst durch die Eingabe eines entsprechenden Schreibbefehles in die Steuereinheit 40 ausgelöst. Unter der Steuerung der Steuereinheit 40 wird dabei dann zunächst die Ansaugpumpe 61 der Ansaugeinrichtung 6 eingeschaltet, um über das Kanalsystem 32 und die Ansaugöffnungen 34 im Teller 31 der Referenzstation 3 das Papierblatt 51 anzusaugen und ortsfest während des Schreibzyklus des Referenzmusters 52 und eines nachfolgenden Detektionszyklus durch die Halbleiterkamera 4.4 festzuhalten.

Die Steuereinheit 40 steuert dann unter Verwendung eines internen Programms den X-Linearantrieb 91 und den Y-Linearantrieb 92 des Antriebs 9 derart an, dass die Laserstrahlablenkeinheit 1 bzw. der Laserkopf über der zentralen Mittenposition (x_{z},y_{z}) mit Bezug auf die Oberseite 33 des ebenen Tellers 31 positioniert wird. Nachdem diese Mittenposition erreicht worden ist, schaltet die Steuereinheit 40 die Laserquelle bzw. den Laser 7 ein und der erzeugte Laserstrahl 20 wird über die Laserstrahlablenkeinheit 1 auf das Papierblatt 51 entsprechend der Mittenposition (x_{z},y_{z}) als Ausgangsposition geworfen. In Fig. 3 ist die Mittenposition (x_{z},y_{z}) in der geschriebenen Kreuzmatrix durch den Kreuzungspunkt des Kreuzes 55 mit der Matrixposition (Zeile 5/ Spalte 5) gegeben. Anschließend wird ausgehend von dieser Mittenposition die komplette Kreuzmatrix entsprechend dem abgespeicherten, vorgegebenen Kreuzmatrixmuster im Halbleiterspeicher 42 auf das Papierblatt 51 als Referenzfläche 5 geschrieben, wobei die Spiegelantriebe 12 der Laserstrahlablenkeinheit 1 von der Steuereinheit 40 entsprechend dem gespeicherten, vorgegebenen Kreuzmatrixmuster angesteuert werden, um die beiden Ablenkspiegel 13 über die Spiegelantriebe 12 der Laserstrahlablenkeinheit 1 zum Ablenken des Laserstrahls 20 auszulenken. Beim "Schreiben" wandert der Laserstrahl 20 nun über die freiliegende Oberfläche des Papierblatts 51, wobei die Papieroberfläche verbrennt und eine entsprechend geschwärztes Muster auf dem Papierblatt 51 entsteht, das eine Kreuzmatrix als geschriebenes Referenzmuster 52 in der Form der vorgegebenen Kreuzmatrix des vorgegebenen Musters wiedergibt. Nach dem Schreiben des vollständigen Referenzmusters 52 wird dann der Laserstrahl 20 auf Befehl der zentralen Steuereinheit 40 wieder abgeschaltet. Während des Schreibens des gesamten Referenzmusters 52 oder der Kreuzmatrix auf das Papierblatt 51 wird die Position der Laserstrahlablenkeinheit 1 über der Mittenposition (x_{z},y_{z}) beibehalten. Das heißt, die Ablenkung des Laserstrahls 20 zum Schreiben der Kreuzmatrix wird nur durch die Spiegelantriebe 12 mit den zugehörigen Ablenkspiegeln 13 der Laserstrahlablenkeinheit 1 bewirkt.

Es liegt nunmehr das tatsächlich geschriebene Kreuzmatrixmuster als Referenzmuster 52 von Fig. 3 vor, das 9 Zeilen und 9 Spalten mit insgesamt 81 geschriebenen Kreuzen hat, wobei der Abstand zwischen den Kreuzungspunkten von jeweils zwei benachbarten Kreuzen in einer Zeile oder in einer Spalte des Referenzmusters gleich ist und hier in dem Beispiel 16 mm beträgt. Zudem befinden sich die Kreuzungspunkte der Kreuze einer Zeile oder der Kreuze einer Spalte genau auf einer gedachten Geraden. Die unsymmetrischen Kreuze in den Randzeilen und Randspalten der geschriebenen Kreuzmatrix von Fig. 3 in Originalgröße kommen durch eine vorgegebene Scanfeldbegrenzung der Laserstrahlablenkeinheit 1 zustande. Die geschriebene Kreuzmatrix des Referenzmusters 52 kann auch als Ist-Kreuzmatrix bezeichnet werden. Die Größe des Scanfelds oder Ablenkfelds der Laserstrahlablenkeinheit 1 entspricht der Größe des Papierblatts 51 oder der Größe der geschriebenen Kreuzmatrix als Referenzmuster, um eine Feldkorrekturtabelle oder Fehlerkorrektur für das gesamte Scanfeld der Laserstrahlablenkeinheit 1 bereitstellen zu können. Nach dem Schreiben des Referenzmusters 52 von Fig. 3 wird der Laserstrahl 20 wieder abgeschaltet.

Als nächstes wird dann die Detektionseinrichtung 4 von der Steuereinheit 40 eingeschaltet und der x-Linearantrieb 91 und den y-Linearantrieb 92 des Antriebs 9 wird von der Steuereinheit 40 derart angesteuert, dass die Detektionseinrichtung 4 bzw. die Halbleiterkamera 4.4 nacheinander über sämtlichen XY-Positionen der abgespeicherten Punktmatrix positioniert wird, wobei der gegebene Abstand zwischen dem Mittenstrahl 21 des Laserstrahls 20 in senkrechter Stellung und der Mittenstrahlachse 4.8 der Halbleiterkamera 4.4 berücksichtigt wird. Über das Objektiv 4.1, den CCD-Chip 4.2 und die Kameraelektronik oder Kameraschnittstelle 4.3 der Halbleiterkamera 4.4 wird dann ein digitales Pixeldatenmuster des jeweils geschriebenen Kreuzes des geschriebenen Kreuzmatrixmusters aufgenommen und erzeugt. D.h., es werden die insgesamt 81 Kreuze der geschriebenen Kreuzmatrix des Referenzmusters 52 jeweils einzeln von der Detektionseinrichtung 4 gemäß den gespeicherten Koordinaten der Punktmatrix unter Verwendung des Antriebs 9 sukzessive angefahren. Für jedes einzelne Kreuz der geschriebenen Kreuzmatrix z.B. von Fig. 3 wird dabei von der Halbleiterkamera 4.4 ein Abbild des jeweiligen Kreuzes aufgenommen und in ein detektiertes Kreuzmuster als detektiertes Muster entsprechend einem detektierten Pixeldatenmuster umgesetzt und in dem Halbleiterspeicher 42 der Steuereinheit 40 gespeichert. Es werden folglich 81 (einundachtzig) detektierte Kreuzmuster erzeugt und gespeichert. Auch in jedem detektierten Kreuzmuster entsprechen die schwarzen Pixel des Pixeldatenmusters z.B. dem Wert "1" in dem zugeordneten, geschriebenen Kreuz des Referenzmusters 52 auf dem Papierblatt 51 als Referenzfläche 5. Die weißen Pixel des Pixeldatenmusters mit dem Wert "0" entsprechen dagegen den unbeschriebenen, weißen Bereichen des Papierblatts 51 in dem Aufnahmefeld oder Abbildungsfeld der Halbleiterkamera 4.4. In Fig. 5 ist schematisch das Aufnahmefeld 4.5 der Halbleiterkamera 4.4 angegeben, wobei hier beispielhaft ein quadratisches Aufnahmefeld 4.5 von 12 mm x 12 mm Kantenlänge mit Bezug auf die Ebene der Referenzfläche 5 oder Oberseite 33 des Tellers 31 gezeigt ist.

Jedes der 81 abgespeicherten, detektierten geschriebenen Kreuze wird nun in der Steuereinheit 40 einzeln mit dem gespeicherten Vorlagekreuzmuster 4.6 verglichen, um den in der Laserstrahlablenkeinheit 1 erzeugten Fehler zu ermitteln.

Nachfolgend soll anhand des in Fig. 5 bezüglich der Mittenposition (x_{z},y_{z}) gezeigten Beispiels der Vergleich erläutert werden. Von der Halbleiterkamera 4.4, die auf die Mittenposition (x_{z},y_{z}) positioniert worden ist, wird innerhalb ihres Aufnahmebereichs 4.5 das Kreuz 55 (Spalte 5/Zeile 5) des geschriebenen Kreuzmatrixmusters des Referenzmusters 52 auf dem Papierblatt 51 als Referenzfläche 5 gemäß Fig. 3 detektiert, wobei das detektierte Kreuz 4.7 mit gestichelten Linien in Fig. 5 eingezeichnet ist. Das detektierte Kreuz 4.7 wird als digitales Pixeldatenmuster in dem Halbleiterspeicher 42 der Steuereinheit 40 abgespeichert. Wie Fig. 5 zu entnehmen ist, ist das detektierte Kreuz 4.7 gegenüber dem Kreuz 4.6 des Vorlagemusters versetzt. Dieser Versatz stellt einen Fehler bzw. eine Abweichung dar, der wie gesagt durch z.B. Langzeitdriftfehler der Spiegelantriebe 12 in der Laserstrahlablenkeinheit 1, Temperatureffekte, usw. erzeugt wird. Der Fehler weist im allgemeinen sowohl eine Komponente xₑ in X-Richtung als auch eine Komponente yₑ in y-Richtung auf, wie in Fig. 5 veranschaulicht wird. Um diesen Fehler ermitteln zu können, führt die Steuereinheit 40 einen Vergleich zwischen dem einzelnen, detektierten Kreuz, hier im Beispiel dem Kreuz 4.7, und dem gespeicherten Vorlagemuster, z.B. dem Kreuz 4.6, durch.

Genauer überprüft der Mikroprozessor 41 der Steuereinheit 40 zunächst, ob in einer Pixeldatenzeile in x-Richtung des Vorlagemusters ein Übergang von "0" auf "1" und nachfolgend wieder von "1" auf "0" vorhanden ist. Hat er einen solchen Übergang gefunden, speichert er den zugehörigen x-Koordinatenwert ab.
In dem Beispiel von Fig. 5 ist das der x-Koordinatenwert x_{z} des Vorlagemusters mit dem Kreuz 4.6. Anschließend überprüft der Mikroprozessor 41, ob in einer Pixeldatenspalte in y-Richtung des Vorlagemusters ein Übergang von "0" auf "1" und nachfolgend wieder von "1" auf "0" vorhanden ist. Hat er einen solchen Übergang gefunden, speichert er auch den zugehörigen y-Koordinatenwert ab. In dem Beispiel von Fig. 5 ist das der y-Koordinatenwert y_{z} des Vorlagemusters mit dem Kreuz 4.6. Diese Überprüfung des Vorlagemusters ist nur einmal für sämtliche Vergleiche für eine geschriebene Kreuzmatrix erforderlich.

Anschließend überprüft der Mikroprozessor 41, ob in einer Pixeldatenzeile in x-Richtung des Pixeldatenmusters des detektierten Kreuzmusters ein Übergang von "0" auf "1" und nachfolgend wieder von "1" auf "0" vorhanden ist. Hat er einen solchen Übergang gefunden, speichert er den zugehörigen x-Koordinatenwert ab. In dem Beispiel von Fig. 5 ist das der x-Koordinatenwert xᵢ des detektierten Kreuzes 4.7. Anschließend überprüft der Mikroprozessor 41, ob in einer Pixeldatenspalte in y-Richtung des Pixeldatenmusters des zu vergleichenden, detektierten Kreuzmusters ein Übergang von "0" auf "1" und nachfolgend wieder von "1" auf "0" vorhanden ist. Hat er einen solchen Übergang gefunden, speichert er auch den zugehörigen y-Koordinatenwert ab. In dem Beispiel von Fig. 5 ist das der y-Koordinatenwert yᵢ des detektierten Musters mit dem Kreuz 4.7. Die Differenz zwischen xᵢ und x_{z} ergibt dann den Fehler xₑ mit xₑ = xᵢ - x_{z}. Die Differenz zwischen yᵢ und y_{z} ergibt dann den Fehler yₑ mit yₑ = yᵢ - y_{z}. Zusammengefasst ergibt sich folglich aus dem Vergleich der jeweilige Fehlervektor (xₑ,yₑ). Allgemein muss für jedes Kreuz der verwendeten Kreuzmatrix des Referenzmusters 52 dieser Vergleich durchgeführt werden, um den Fehlervektor pro Kreuz ermitteln zu können. Im Beispiel von Fig. 3 werden also für die insgesamt 81 Kreuze des geschriebenen Referenzmusters 52 auch 81 solche Vergleiche in der Steuereinheit 40 durchgeführt, wodurch insgesamt 81 Fehlervektoren bzw. Abweichungen ermittelt werden können.

Die ermittelten Fehlervektoren werden dann in Zuordnung zu der gespeicherten Punktmatrix in einer Feldkorrekturtabelle in dem Halbleiterspeicher 42 abgespeichert. Für das Beispiel von Fig. 5 bedeutet dies, dass zu dem Punkt (x_{z},y_{z}) der Punktmatrix der Fehlervektor (xₑ,yₑ) als Abweichung in der Feldkorrekturtabelle abgespeichert wird. Bezüglich der Kreuzmatrix von Fig. 3 bedeutet dies, dass 81 (einundachtzig) ermittelte Fehlervektoren in Zuordnung zu den 81 Punkten der Punktmatrix in der Feldkorrekturtabelle gespeichert werden. Die in der Feldkorrekturtabelle gespeicherten Fehlervektoren können auch als Fehlerstützwerte oder einfach als Stützwerte für beliebige Fehlervektoren über das gesamte Scanfeld der Laserstrahlablenkeinheit 1 gesehen betrachtet werden.

Die Anwendung der ermittelten Feldkorrekturtabelle soll nachfolgend anhand eines Beispiels erläutert werden. Bei dem Beispiel wird davon ausgegangen, dass der Laserstrahl 20 beim Bearbeiten eines Werkstücks, z.B. eines Wafers oder einer Halbleitersolarzelle, auf einem Bearbeitungspunkt (x_{z},y_{z}) auftreffen soll.

Weiterhin wird davon ausgegangen, dass die Vorrichtung zur Korrektur der Laserstrahlablenkeinheit 1 allgemein in einer Bearbeitungsvorrichtung 10 der Erfindung zum Bearbeiten eines Werkstücks mit dem Laserstrahl 20 eingebaut ist und das zugehörige Verfahren der Erfindung in der Bearbeitungsvorrichtung 10 eingerichtet ist. In Fig. 1 ist eine beispielhafte Bearbeitungsvorrichtung 10 gezeigt, in der z.B. eine Halbleitersolarzelle 10.1 mit dem Laserstrahl 20 bearbeitet werden kann. Als Bearbeitung mit dem Laserstrahl 20 kommt allgemein z.B. das Erzeugen eines Lochs im Werkstück, das Unterteilen eines Werkstücks, die Ausbildung eines Grabens in dem Werkstück, die Trennung bzw. Unterberechung von Strukturen des Werkstücks usw. in Frage.

Soll also der Laserstrahl 20 auf den durch die Bearbeitung auf den vorgesehenen Punkt (x_{z},y_{z}) auftreffen, überprüft die Steuereinheit 40 zunächst, ob dieser Punkt (x_{z},y_{z}) in der Feldkorrekturtabelle vorhanden ist. Da dieser Punkt in der ermittelten Feldkorrekturtabelle, wie vorstehend erläutert wurde, explizit vorhanden ist und wie gezeigt dem Mittelpunkt des Scanfelds der Laserstrahlablenkeinheit 1 auf der Referenzfläche 5 entspricht, kann die Steuereinheit 40 den zugehörigen Fehlervektor (xₑ,yₑ) oder Stützwert direkt verwenden, um den ansonsten auftretenden Fehler beim Schreiben oder Bearbeiten zu korrigieren oder zu kompensieren. Diese Korrektur wird von der Steuereinheit 40 bewirkt, indem sie den Fehlervektor vorzeichenrichtig von dem vorgegeben Punkt (x_{z},y_{z}) subtrahiert, um einen korrigierten oder kompensierten Punkt (x_{z}-xₑ, y_{z}-yₑ) zu erhalten. Die Spiegelantriebe 12 der Laserstrahlablenkeinheit 1 zum Auslenken der Ablenkspiegel 13 werden dann von der Steuereinheit 40 entsprechend dem kompensierten Punkt angesteuert. Da durch die Laserstrahlablenkeinheit 1 wie erläutert der Fehler (xₑ,yₑ) erzeugt wird, ergibt sich der tatsächliche Auftreffpunkt bzw. Istposition des Laserstrahls 20 zu (x_{z}-xₑ+xₑ,y_{z}-yₑ+yₑ) = (x_{z},y_{z}), was dem vorgegeben Punkt (x_{z},y_{z}) bzw. der Sollposition entspricht.

Falls der vorgegebene Punkt (x,y) nicht einem der Punkte mit zugeordneten Fehlervektoren der ermittelten Feldkorrekturtabelle entspricht, d.h. der vorgegebene Auftreffpunkt des Laserstrahls 20 entspricht nicht einem der Stützpunkte in der abgespeicherten Feldkorrekturtabelle, wird in der Steuereinheit 40 eine softwaregestützte Interpolation durchgeführt, um den Fehler der Laserstrahlablenkeinheit 1 beim Bearbeiten eines Werkstücks korrigieren bzw. kompensieren zu können.

Falls keiner der Stützpunkte mit dem vorgegebenen Punkt bzw. Positionspunkt übereinstimmt, überprüft die Steuereinheit 40 zunächst, welche zwei Stützpunkte der ermittelten Feldkorrekturtabelle dem vorgegebenen Punkt am nächsten sind. Für die beiden am nächsten liegenden Stützpunkte wird aus den beiden, in der Feldkorrekturtabelle gespeicherten, zugeordneten Fehlervektoren gemäß einer linearen Interpolation ein gemittelter Fehlervektor (x̅ₑ,y̅ₑ) ermittelt, d.h. die beiden Fehlervektoren werden addiert und der resultierende Vektor wird mit 0,5 multipliziert, um den gemittelten Fehlervektor (x̅ₑ̅,y̅ₑ̅) zu erhalten. Die Korrektur wird von der Steuereinheit 40 dann bewirkt, indem sie den gemittelten Fehlervektor (x̅ₑ̅,y̅ₑ̅) vorzeichenrichtig von dem vorgegeben Punkt (x,y) subtrahiert, um einen korrigierten oder kompensierten Punkt (x-x̅ₑ̅,y-y̅ₑ̅) zu erhalten. Die Spiegelantriebe 12 der Laserstrahlablenkeinheit 1 zum Auslenken der Ablenkspiegel 13 werden dann von der Steuereinheit 40 entsprechend dem kompensierten Punkt bzw. der kompensierten Position angesteuert. Da durch die Laserstrahlablenkeinheit 1 wie erläutert der mittlere Fehler bzw. die mittlere Abweichung (x̅ₑ̅,y̅ₑ̅) erzeugt wird, ergibt sich der tatsächliche Auftreffpunkt oder die Istposition des Laserstrahls 20 auf dem Werkstück dann zu (x-x̅ₑ+xₑ,y-y̅ₑ+yₑ) = (x,y), was angenähert dem vorgegeben Punkt (x,y) bzw. der Sollposition entspricht, wenn der gemittelte Fehlervektor (x̅ₑ,y̅ₑ) zumindest angenähert gleich dem tatsächlichen Fehlervektor (xₑ,yₑ) ist.

Die Lineare Interpolation kann auch mit mehr als zwei Stützpunkten der Feldkorrekturtabelle, z.B. mit vier Stützpunkten, durchgeführt werden. Weiterhin kann in einer alternativen Ausführungsform der Erfindung auch eine Interpolation oder ein Näherungsverfahren höherer Ordnung zur Interpolation des Fehlervektors in dem Verfahren der Erfindung verwendet werden. Zudem kann zusätzlich in einer alternativen Ausführungsform der Erfindung auch ein Fangbereich um jeden der Stützpunkte der Feldkorrekturtabelle eingerichtet sein. Liegt der vorgegebene Punkt für die Bearbeitung durch den Laserstrahl 20 in einem der Fangbereiche, wird dann der gespeicherte Fehlervektor des zugehörigen Stützpunkts als Fehlervektor in der Korrektur verwendet. Nur wenn der vorgegebene Punkt nicht in einem Fangbereich liegt wird dann die erläuterte, lineare Interpolation oder eine Interpolation höherer Ordnung durchgeführt, um den geeigneten Fehlervektor für die Korrektur oder Kompensation zu erzeugen.

## Patentansprüche

1. System mit einer Laserstrahlquelle, die einen Laserstrahl (20) erzeugt, einer Laserstrahlablenkeinheit (1), die den Laserstrahl (20) von der Laserstrahlquelle innerhalb eines Ablenkfeldes ablenkt, und mit einer Vorrichtung zum Korrigieren der Laserstrahlablenkeinheit (1)
**dadurch gekennzeichnet,**
**dass** die Vorrichtung zum Korrigieren der Laserstrahlablenkeinheit aufweist:
eine Steuereinheit (40), die mit der Laserstrahlablenkeinheit (1) gekoppelt ist und ein vorgegebenes Muster an die Laserstrahlablenkeinheit (1) ausgibt,
eine Referenzstation (3), die eine Folie oder ein Blatt als eine Referenzfläche (5) hat, auf der die Laserstrahlablenkeinheit (1) das vorgegebene Muster von der Steuereinheit (40) als ein Referenzmuster (52) mittels Ablenkung des Laserstrahls (20) durch den Laserstrahl schreibt,
eine Detektionseinrichtung (4), die mit der Steuereinheit (40) gekoppelt ist und die Referenzfläche (5) optisch abtastet, um das geschriebene Referenzmuster (52) zu detektieren und ein zugeordnetes, detektiertes Muster zu erzeugen,
wobei die Steuereinheit (40) das detektierte Muster von der Detektionseinrichtung (4) mit dem vorgegebenen Muster vergleicht, um eine Abweichung zwischen dem vorgegebenen Muster und dem detektierten Muster zur Korrektur der Ablenkung des Laserstrahls (20) in der Laserstrahlablenkeinheit (1) zu ermitteln.

2. System nach Anspruch 1, **dadurch gekennzeichnet, dass** die Referenzstation (3) einen ebenen Teller (31) hat, auf dem die Referenzfläche (5) vorgesehen ist.

3. System nach Anspruch 1 oder Anspruch 2, **dadurch gekennzeichnet, dass** die Referenzfläche (5) ein Papierblatt (51) ist.

4. System nach einem der vorstehenden Ansprüche, **dadurch gekennzeichnet, dass** die Referenzfläche (5) in der Referenzstation (3) oder auf dem Teller gegen Verrutschen gesichert ist.

5. System nach Anspruch 4, **dadurch gekennzeichnet, dass** eine Ansaugeinrichtung (6) vorgesehen ist, die die Referenzfläche (5) in der Referenzstation (3) durch Ansaugung festhält.

6. System nach einem der vorstehenden Ansprüche, **dadurch gekennzeichnet, dass** die Laserstrahlablenkeinheit (1) ein Galvano-Scanner ist.

7. System nach einem der vorstehenden Ansprüche, **dadurch gekennzeichnet, dass** das auf der Referenzfläche (5) mittels Laserstrahl (20) erzeugte Referenzmuster (52) mindestens ein Kreuz (55) enthält.

8. System nach Anspruch 7, **dadurch gekennzeichnet, dass** das Referenzmuster (52) eine Kreuzmatrix aufweist, die matrixförmig angeordnete und ausgebildeten Kreuze (55) enthält.

9. System nach einem der vorstehenden Ansprüche, **dadurch gekennzeichnet, dass** die Referenzfläche (5) mindestens die Größe eines Ablenkfelds des Laserstrahls (20) in der Referenzstation (3) abdeckt.

10. System nach einem der vorstehenden Ansprüche, **dadurch gekennzeichnet, dass** die Detektionseinrichtung (4) eine Halbleiterkamera (4.4) ist.

11. System nach einem der Ansprüche 1 bis 10, **dadurch gekennzeichnet, dass** das System in einer Bearbeitungsvorrichtung (10) zum Bearbeiten eines Werkstücks, insbesondere eines flächigen Werkstücks, eines Wafers, einer Platte, oder einer Halbleitersolarzelle (10.1), mit dem Laserstrahl (20) vorgesehen ist.

12. Verfahren zum Korrigieren einer Ablenkung einer Laserstrahlablenkeinheit (1), die einen Laserstrahl (20) von einer Laserstrahlquelle innerhalb eines Ablenkfeldes ablenkt, **gekennzeichnet durch** folgenden Schritte:
ein vorgegebenes Muster wird von einer Steuereinheit (40) an die Laserstrahlablenkeinheit (1) ausgegeben,
das vorgegebene Muster wird **durch** den Laserstrahl (20) von der Laserstrahlablenkeinheit (1) **durch** Ablenken des Laserstrahls (20) als Referenzmuster (52) auf eine Folie oder ein Blatt als Referenzfläche (5) geschrieben,
die Referenzfläche (5) wird von einer Detektionseinrichtung (4) abgetastet, um das geschriebene Referenzmuster (52) zu detektieren und ein zugeordnetes, detektiertes Muster zu erzeugen,
das detektierte Muster von der Detektionseinrichtung (4) wird in der Steuereinheit (40) mit dem vorgegebenen Muster verglichen, um einen Fehler oder eine Abweichung zwischen dem vorgegebenen Muster und dem detektierten Muster zur Korrektur der Ablenkung des Laserstrahls (20) in der Laserstrahlablenkeinheit (1) zu erzeugen.

13. Verfahren nach Anspruch 12, **dadurch gekennzeichnet, dass** die Referenzfläche (5) in der Zeit zwischen dem Beginn des Beschreibens mit dem vorgegebenen Muster durch den Laserstrahl (20) und dem Beenden des Lesens des auf die Referenzfläche (5) geschriebenen Referenzmusters (52) ortsfest ist.

14. Verfahren nach Anspruch 12 oder Anspruch 13, **dadurch gekennzeichnet, dass** die Referenzfläche (5) ausgewechselt werden kann und dass vor jedem Schreibvorgang eine neue, unbeschriebene Referenzfläche (5) zum Beschreiben verwendet wird.

15. Verfahren nach einem der Ansprüche 12 bis 14, **dadurch gekennzeichnet, dass** eine Kreuzmatrix mit matrixartig angeordneten Kreuzen (4.7) als Referenzmuster (52) auf der Referenzfläche (5) durch den Laserstrahl (20) erzeugt wird.

16. Verfahren nach Anspruch 15, **dadurch gekennzeichnet, dass** eine regelmäßige Kreuzmatrix mit einer Anzahl von Kreuzen zwischen 3 x 3 Kreuzen und 20 x 20 Kreuzen und entsprechend vielen Kreuzungspunkten erzeugt wird.

17. Verfahren nach Anspruch 15 oder Anspruch 16, **dadurch gekennzeichnet, dass** beim Lesen oder Detektieren der Kreuzmatrix des Referenzmusters (52) auf der Referenzfläche (5) die Detektionseinrichtung (4) zu jedem einzelnen der Kreuze der Kreuzmatrix verfahren wird, um entsprechend viele, detektierte Muster aufzunehmen.

18. Verfahren nach Anspruch 17, **dadurch gekennzeichnet, dass** das vorgegebene Muster mit dem jeweils detektierten Muster verglichen wird, um eine Abweichung oder einen Fehlervektor (xe,ye) zu erhalten.

19. Verfahren nach Anspruch 18, **dadurch gekennzeichnet, dass** aus den ermittelten Abweichungen oder Fehlervektoren (xe,ye) eine Feldkorrekturtabelle für das gesamte Ablenkfeld der Laserstrahlablenkeinheit (1) erzeugt wird.

20. Verfahren nach Anspruch 19, **dadurch gekennzeichnet, dass** aus den ermittelten Abweichungen oder Fehlervektoren (xe,ye) eine Feldkorrekturtabelle für das gesamte Ablenkfeld der Laserstrahlablenkeinheit (1) erzeugt wird, wobei die Fehlervektoren Stützpunkte sind, die einzelnen Punkten einer Punktmatrix zugeordnet sind, die wiederum den entsprechen Kreuzungspunkten einer Kreuzmatrix als Referenzmuster (52) zugeordnet sind.

21. Verfahren nach Anspruch 20, **dadurch gekennzeichnet, dass** für einen Punkt oder eine Position, die nicht in der Punktmatrix enthalten ist, durch eine lineare Interpolation oder eine Interpolation höherer Ordnung in Abhängigkeit von einem Stützpunkt oder mehreren Stützpunkten in der Feldkorrekturtabelle die dem Punkt zugeordnete Abweichung oder der Fehlervektor ermittelt wird.

22. Verfahren nach Anspruch 20 oder Anspruch 21, **dadurch gekennzeichnet, dass** die Feldkorrekturtabelle verwendet wird, um eine tatsächliche Arbeitsposition des Laserstrahls (20) in der Laserablenkeinheit (1) derart zu korrigieren oder zu kompensieren, dass die tatsächliche Arbeitsposition des Laserstrahls (20) auf einem zu bearbeitenden Substrat oder Werkstück gleich der vorgegebenen Arbeitsposition ist.

23. Verfahren nach einem der Ansprüche 12 bis 22, **dadurch gekennzeichnet, dass** das Verfahren mehrmals hintereinander ausgeführt wird.

24. Verfahren nach einem der Ansprüche 12 bis 23, **dadurch gekennzeichnet, dass** das Verfahren periodisch durchgeführt wird.

25. Verfahren nach Anspruch 24, **dadurch gekennzeichnet, dass** das Verfahren alle acht Stunden durchgeführt wird.

26. Verfahren nach einem der Ansprüche 12 bis 25, **dadurch gekennzeichnet, dass** das Verfahren in Abhängigkeit von der Arbeitszeit der Laserstrahlablenkeinheit (1) durchgeführt wird.

27. Verfahren nach einem der Ansprüche 12 bis 26, **dadurch gekennzeichnet, dass** das Verfahren in einer Bearbeitungsvorrichtung (10) zum Bearbeiten eines Werkstücks, insbesondere eines flächigen Werkstücks, eines Wafers, einer Platte oder einer Halbleitersolarzelle (10.1), mit dem Laserstrahl (20) verwendet wird.

## Claims

1. System comprising a laser beam source forming a laser beam (20), a laser beam deflector (1) deflecting the laser beam (20) from the laser beam source within a scanning field, and a device for correcting the laser beam deflector (1) **characterized in that** the device for correcting the laser beam deflector comprises:
a controller (40) coupled to the laser beam deflector (1) and outputting a predetermined pattern to the laser beam deflector (1),
a reference station (3) comprising a film or sheet as a reference surface (5) on which the laser beam deflector (1) scribes or writes the predetermined pattern by the laser beam from the controller (40) as a reference pattern (52) by deflection of the laser beam,
detecting means (4) coupled to the controller (40) for optically sensing the reference surface (5) to detect the reference pattern (52) and to generate an assigned detected pattern,
the controller (40) comparing the pattern detected by the detecting means (4) to the predetermined pattern to capture any deviation between the predetermined pattern and the detected pattern for correcting deflection of the laser beam (20) in the laser beam deflector (1).

2. System as set forth in claim 1, **characterized in that** the reference station (3) has a flat plate (31) on which the reference surface (5) is provided.

3. System as set forth in claim 1 or claim 2, **characterized in that** the reference surface (5) is a sheet of paper (51).

4. System as set forth in any of the preceding claims, **characterized in that** the reference surface (5) is secured in the reference station (3) or to the plate to prevent it slipping out of place.

5. System as set forth in claim 4, **characterized in that** a suction means (6) is provided which secures the reference surface (5) in place in the reference station (3) by suction.

6. System as set forth in any of the preceding claims, **characterized in that** the laser beam deflector (1) is a galvano scanner.

7. System as set forth in any of the preceding claims, **characterized in that** the reference pattern (52) generated on the reference surface (5) by means of the laser beam (20) contains at least one cross (55).

8. System as set forth in claim 7, **characterized in that** the reference pattern (52) comprises a matrix of crosses (55) arranged and configured in a matrix.

9. System as set forth in any of the preceding claims, **characterized in that** the reference surface (5) covers at least the size of a scanning field of the laser beam (20) in the reference station (3).

10. System as set forth in any of the preceding claims, **characterized in that** the detecting means (4) is a semiconductor camera (4.4).

11. System as set forth in any of the claims 1 to 10, **characterized in that** the system is provided in a device (10) for machining a workpiece, particularly a sheet workpiece, a wafer, a plate, or a semiconductor solar cell (10.1), with a laser beam (20).

12. Method for correcting deflection in a laser beam deflector (1) deflecting a laser beam (20) from the a laser beam source within a scanning field, the method comprising the following steps:
outputting a predetermined pattern by a controller (40) to the laser beam deflector (1),
scribing or writing the predetermined pattern as a reference pattern (52) on a film or sheet as a reference surface (5) by deflecting the laser beam (20) from the laser beam deflector (1),
sensing the reference surface (5) by the detecting means (4) to detect the reference pattern (52) and to generate an assigned detected pattern,
comparing the pattern detected by the detecting means (4) in the controller (40) to the predetermined pattern to capture any deviation or error between the predetermined pattern and the detected pattern to correct deflection of the laser beam (20) in the laser beam deflector (1).

13. Method as set forth in claim 12, **characterized in that** in the time between the start of writing the predetermined pattern by the laser beam (20) and end of reading the reference pattern (52) on the reference surface (5) the reference surface (5) is stationary.

14. Method as set forth in claim 12 or claim 13, **characterized in that** the reference surface (5) can be replaced and that a new unscribed or unwritten reference surface (5) is used for scribing.

15. Method as set forth in any of the claims 12 to 14, **characterized in that** a matrix arrangement of crosses (4.7) is generated by the laser beam (20) as the reference pattern (52) on the reference surface (5).

16. Method as set forth in claim 15, **characterized in that** regular matrix of crosses numbering between 3 x 3 crosses and 20 x 20 crosses with a corresponding number of points of intersection is generated.

17. Method as set forth in claim 15 or claim 16, **characterized in that** for reading or detecting the matrix of crosses of the reference pattern (52) on the reference surface (5) the detecting means (4) is moved to each and every cross of the matrix to detect a corresponding number of detected patterns.

18. Method as set forth in claim 17, **characterized in that** the predetermined pattern is compared to each and every pattern as detected to obtain any deviation or an error vector (xₑ,yₑ).

19. Method as set forth in claim 18, **characterized in that** from the obtained deviations or error vectors (xₑ,_{Ye}) a field correction table is generated for the complete scanning field of the laser beam deflector (1).

20. Method as set forth in claim 19, **characterized in that** on the basis of the obtained deviations or error vectors (xₑ,yₑ) a field correction table is generated for the complete scanning field of the laser beam deflector (1), the error vectors being supporting dots or points assigned to each and every point of a point matrix which in turn are assigned the corresponding points of intersection of a matrix of crosses as the reference pattern (52).

21. Method as set forth in claim 20, **characterized in that** a point or a position not contained in the point matrix is obtained by linear interpolation or higher order interpolation as a function of one or more supporting points in the field correction table establishing the deviation or error vector assigned to the point.

22. Method as set forth in any of the claims 20 to 21, **characterized in that** the field correction table is used to correct or compensate an actual working position of the laser beam (20) in the laser beam deflector (1) such that the actual working position of the laser beam (20) on a substrate or workpiece to be machined is the predetermined working position.

23. Method as set forth in any of the claims 12 to 22, **characterized in that** the method is performed repeatedly in sequence.

24. Method as set forth in any of the claims 12 to 23, **characterized in that** the method is performed cyclically.

25. Method as set forth in claim 24, **characterized in that** the method is performed every eight hours.

26. Method as set forth in any of the claims 12 to 25, **characterized in that** the method is performed as a function of the working time of the laser beam deflector (1).

27. Method as set forth in any of the claims 12 to 26, **characterized in that** the method is used in a device (10) for machining a workpiece, particularly a sheet workpiece, a wafer, a plate, or a semiconductor solar cell (10.1), with a laser beam (20).

## Revendications

1. Système comprenant une source de rayon laser, qui génère un rayon laser (20), une unité de déflexion de rayon laser (1) qui soumet le rayon laser (20) à une déflexion à partir de la source de rayon laser au sein d'un champ de déflexion, et un dispositif pour la correction de l'unité de déflexion de rayon laser (1), **caractérisé en ce que** le dispositif pour la correction de l'unité de déflexion de rayon laser présente :
une unité de commande (40) qui est couplée à l'unité de déflexion de rayon laser (1) et qui délivre un motif prédéfini à l'unité de déflexion de rayon laser (1);
un poste de référence (3) qui possède une feuille mince ou une feuille à titre de surface de référence (5) sur laquelle l'unité de déflexion de rayon laser (1) écrit le motif prédéfini par l'unité de commande (40) pour faire office de motif de référence (52) au moyen d'une déflexion du rayon laser (20), via le rayon laser;
un mécanisme de détection (4) qui est couplé à l'unité de commande (40) et qui procède à une exploration optique de la surface de référence (5) afin de détecter le motif de référence écrit (52) et afin de générer un motif détecté correspondant;
dans lequel l'unité de commande (40) compare le motif détecté du mécanisme de détection (4) au motif prédéfini afin de déterminer une déviation entre le motif prédéfini et le motif détecté pour la correction de la déflexion du rayon laser (20) dans l'unité de déflexion de rayon laser (1).

2. Système selon la revendication 1, **caractérisé en ce que** le poste de référence (3) est un plateau (31) sur lequel on prévoit la surface de référence (5).

3. Système selon la revendication 1 ou selon la revendication 2, **caractérisé en ce que** la surface de référence (5) est une feuille de papier (51).

4. Système selon l'une quelconque des revendications précédentes, **caractérisé en ce que** la surface de référence (5) est assurée contre le glissement dans le poste de référence (3) ou sur le plateau.

5. Système selon la revendication 4, **caractérisé en ce qu'**on prévoit un mécanisme d'aspiration (6) qui retient la surface de référence (5) dans le poste de référence (3) par aspiration.

6. Système selon l'une quelconque des revendications précédentes, **caractérisé en ce que** l'unité de déflexion de rayon laser (1) est un galvano-scanner.

7. Système selon l'une quelconque des revendications précédentes, **caractérisé en ce que** le motif de référence (52) généré sur la surface de référence (5) au moyen du rayon laser (20) contient au moins une croix (55).

8. Système selon la revendication 7, **caractérisé en ce que** le motif de référence (52) présente une matrice de croix qui contient des croix (55) réalisées et disposées sous forme d'une matrice.

9. Système selon l'une quelconque des revendications précédentes, **caractérisé en ce que** la surface de référence (5) recouvre au moins la dimension d'un champ de déflexion du rayon laser (20) dans le poste de référence (3).

10. Système selon l'une quelconque des revendications précédentes, **caractérisé en ce que** le mécanisme de détection (4) est une caméra à semi-conducteurs (4.4).

11. Système selon l'une quelconque des revendications 1 à 10, **caractérisé en ce que** le système est prévu dans un dispositif de traitement (10) pour le traitement d'une pièce à usiner, en particulier d'une pièce à usiner de forme plate, d'une tranche, d'une plaque, ou d'une cellule solaire à semi-conducteurs (10.1), avec le rayon laser (20).

12. Procédé pour la correction d'une déflexion d'une unité de déflexion de rayon laser (1) qui soumet un rayon laser (20) à une déflexion à partir d'une source de rayon laser au sein d'un champ de déflexion, **caractérisé par** les étapes suivantes :
un motif prédéfini est émis par une unité de commande (40) à l'unité de déflexion de rayon laser (1);
le motif prédéfini est écrit par le rayon laser (20) de l'unité de déflexion de rayon laser (1) par déflexion du rayon laser (20) pour faire office de motif de référence (52) sur une feuille mince ou sur une feuille faisant office de surface de référence (5);
la surface de référence (5) est soumise à une exploration par un mécanisme de détection (4) afin de détecter le motif de référence écrit (52) et afin de générer un motif détecté correspondant;
le motif détecté par le mécanisme de détection (4) est comparé, dans l'unité de commande (40), avec le motif prédéfini, afin de déterminer une erreur ou une déviation entre le motif prédéfini et le motif détecté à des fins de correction de la déflexion du rayon laser (20) dans l'unité de déflexion de rayon laser (1).

13. Procédé selon la revendication 12, **caractérisé en ce que** la surface de référence (5) est stationnaire pendant le laps de temps s'étendant entre le début de l'écriture avec le modèle prédéfini via le rayon laser (20) et la fin de la lecture du motif de référence (52) écrit sur la surface de référence (5).

14. Procédé selon la revendication 12 ou selon la revendication 13, **caractérisé en ce que** la surface de référence (5) peut être échangée, et **en ce qu'**on utilise, pour chaque processus d'écriture, une nouvelle surface de référence vierge (5) pour l'écriture.

15. Procédé selon l'une quelconque des revendications 12 à 14, **caractérisé en ce qu'**on génère une matrice de croix comprenant des croix (4.7) disposées sous la forme d'une matrice, à titre de motif de référence (52) sur la surface de référence (5) via le rayon laser (20).

16. Procédé selon la revendication 15, **caractérisé en ce qu'**on génère une matrice de croix régulière possédant un nombre de croix entre 3 x 3 croix et 20 x 20 croix, ainsi qu'un nombre correspondant de points de croisement.

17. Procédé selon la revendication 15 ou selon la revendication 16, **caractérisé en ce que**, lors de la lecture ou de la détection de la matrice de croix du motif de référence (52) sur la surface de référence (5), le mécanisme de détection (4) se déplace en direction de chaque croix individuelle de la matrice de croix pour pouvoir enregistrer le nombre de motifs détectés correspondant.

18. Procédé selon la revendication 17, **caractérisé en ce que** le motif prédéfini est comparé avec le motif respectivement détecté pour obtenir une déviation ou un vecteur d'erreur (xe,ye).

19. Procédé selon la revendication 18, **caractérisé en ce qu'**à partir des déviations ou des vecteurs d'erreurs (xe,ye) déterminés, on génère un tableau de correction de champ pour la totalité du champ de déflexion de l'unité de déflexion de rayon laser (1).

20. Procédé selon la revendication 19, **caractérisé en ce qu'**à partir des déviations ou des vecteurs d'erreurs (xe,ye) déterminés, on génère un tableau de correction de champ pour la totalité du champ de déflexion de l'unité de déflexion de rayon laser (1), les vecteurs d'erreurs représentant des points d'appui qui sont attribués à des points individuels d'une matrice de points, qui sont à leur tour attribués au point de croisement correspondant d'une matrice de croix faisant office de motif de référence (52).

21. Procédé selon la revendication 20, **caractérisé en ce que**, pour un point ou pour une position qui n'est pas repris dans la matrice de points, on détermine, via une interpolation linéaire ou via une interpolation d'ordre supérieur, en fonction d'un point d'appui ou de plusieurs points d'appui dans le tableau de correction de champ, la déviation attribuée au point ou le vecteur d'erreur.

22. Procédé selon la revendication 20 ou la revendication 21, **caractérisé en ce qu'**on utilise le tableau de correction de champ pour corriger ou pour compenser une position de travail réelle du rayon laser (20) dans l'unité de déflexion de rayon laser (1) de telle sorte que la position de travail réelle du rayon laser (20) sur un substrat ou une pièce à usiner à traiter soit égale à la position de travail prédéfinie.

23. Procédé selon l'une quelconque des revendications 12 à 22, **caractérisé en ce que** le procédé est mis en oeuvre plusieurs fois de suite.

24. Procédé selon l'une quelconque des revendications 12 à 23, **caractérisé en ce que** le procédé est mis en oeuvre de manière périodique.

25. Procédé selon la revendication 24, **caractérisé en ce que** le procédé est mis en oeuvre toutes les huit heures.

26. Procédé selon l'une quelconque des revendications 12 à 25, **caractérisé en ce que** le procédé est mis en oeuvre en fonction du temps de travail de l'unité de déflexion de rayon laser (1).

27. Procédé selon l'une quelconque des revendications 12 à 26, **caractérisé en ce que** le procédé est utilisé dans un dispositif de traitement (10) pour le traitement d'une pièce à usiner, en particulier d'une pièce à usiner de forme plate, d'une tranche, d'une plaque, ou d'une cellule solaire à semi-conducteurs (10.1), avec le rayon laser (20).
